# EUROPEAN PATENT APPLICATION

(11) **EP 4 503 857 A1**
(43) Date of publication of application: **05.02.2025**
(21) Application number: 23779768.3
(22) Date of filing: 17.03.2023
(51) Int. Cl.: H05B 6/10

(54) **HEAT TREATMENT DEVICE AND HEAT TREATMENT METHOD**

(30) Priority: 28.03.2022 JP 2022051160
(71) Applicant: IHI Machinery and Furnace Co., Ltd., Tokyo 135-0061 (JP); IHI Corporation, Tokyo 135-8710 (JP)
(72) Inventor: KANEKO, Tatsuto, Tokyo 135-0061 (JP); MATSUDA, Yoshiyasu, Tokyo 135-0061 (JP); OKADA, Shinji, Tokyo 135-0061 (JP); KUBO, Yoshiki, Tokyo 135-0061 (JP)
(74) Representative: TBK
(86) International application number: PCT/JP2023/010671
(87) International publication number: WO 2023/189752

(57) **Abstract**

A heat treatment device includes an object to be transported that contains a treatment target and includes at least a heating element that heats the treatment target, a transport device that transports the object to be transported, and an induction heating device that includes a heating coil that is movable to advance and retract with respect to the object to be transported, and makes a magnetic field act on the object to be transported to generate heat from the heating element.

## Description

### TECHNICAL FIELD

The present disclosure relates to a heat treatment device and a heat treatment method.

Priority is claimed on Japanese Patent Application No. 2022-051160, filed March 28, 2022, the content of which is incorporated herein by reference.

### BACKGROUND ART

Patent Document 1 discloses a graphitization furnace and a graphite producing method that can obtain graphite by continuously heat-treating a powder serving as a carbon source. In the graphitization furnace and the graphite producing method, a conductive powder is accommodated in a crucible made of a conductive material that functions as a heating electrode and the crucible is put in a chamber. In the chamber, an electrode that is separately provided is embedded in the powder and the crucible is transported from one end to the other end of the chamber. Accordingly, the powder is electrically heated and graphite is continuously obtained.

### Citation List

### Patent Document

Patent Document 1: Japanese Unexamined Patent Application, First Publication No. 2014-210710

### SUMMARY OF INVENTION

### Technical Problem

In the background art, although graphite can be continuously obtained, there is room for improvement in maintainability of the device. That is, in order to obtain graphite from a carbon powder, the powder needs to be heated to a high temperature of about 3,000°C in a state in which the air is blocked off, and thus members (members to be heated) that are heated together with the powder, such as the crucible, electrode, and heat insulating material provided around the crucible, deteriorate.

However, since the background art does not take maintainability of the member to be heated into consideration, it is necessary to stop the operation of the device to maintain the members to be heated. That is, there is room for improvement in maintainability in the background art.

An object of the present disclosure is to provide a heat treatment device and a heat treatment method that can improve maintainability of a member to be heated compared to the related art.

### Solution to Problem

A first aspect of the present disclosure is a heat treatment device including an object to be transported that contains a treatment target and includes at least a heating element that heats the treatment target, a transport device that transports the object to be transported, and an induction heating device that includes a heating coil that is movable to advance and retract with respect to the object to be transported, and makes a magnetic field act on the object to be transported to generate heat from the heating element.

In a second aspect of the present disclosure, in the first aspect, the object to be transported may further include a heat insulating material provided around the heating element.

In a third aspect of the present disclosure, in the first or second aspect, the object to be transported may further include a cooling pipe through which a cooling gas flows.

In a fourth aspect of the present disclosure, in any one of the first to third aspects, the object to be transported may include a heat transfer plate that transfers the heat generated from the heating element to an inside of the treatment target.

In a fifth aspect of the present disclosure, in any one of the first to fourth aspects, the object to be transported may be configured to previously hold the heating element and the treatment target in a deaerated atmosphere or an inert gas atmosphere.

A sixth aspect of the present disclosure is a heat treatment method of heat-treating a treatment target, the method including transporting, together with the treatment target, a member to be heated that is heated together with the treatment target.

In a seventh aspect of the present disclosure, in the sixth aspect, in a pre-step prior to a heat treatment, the treatment target may be held in a deaerated atmosphere or an inert gas atmosphere.

### Advantageous Effects of Invention

According to the present disclosure, it is possible to provide a heat treatment device and a heat treatment method that can improve maintainability of a member to be heated compared to the related art.

### BRIEF DESCRIPTION OF DRAWINGS

[FIG. 1] A front view showing the overall configuration of a continuous graphitization device according to a first embodiment of the present disclosure.
[FIG. 2A] A longitudinal sectional view showing the configuration of an object to be transported in the first embodiment of the present disclosure.
[FIG. 2B] A cross-sectional view showing the configuration of the object to be transported in the first embodiment of the present disclosure.
[FIG. 3] A front view showing the overall configuration of a continuous graphitization device according to a second embodiment of the present disclosure.

### DESCRIPTION OF EMBODIMENTS

Hereinafter, embodiments of the present disclosure will be described with reference to the drawings.

### [First Embodiment]

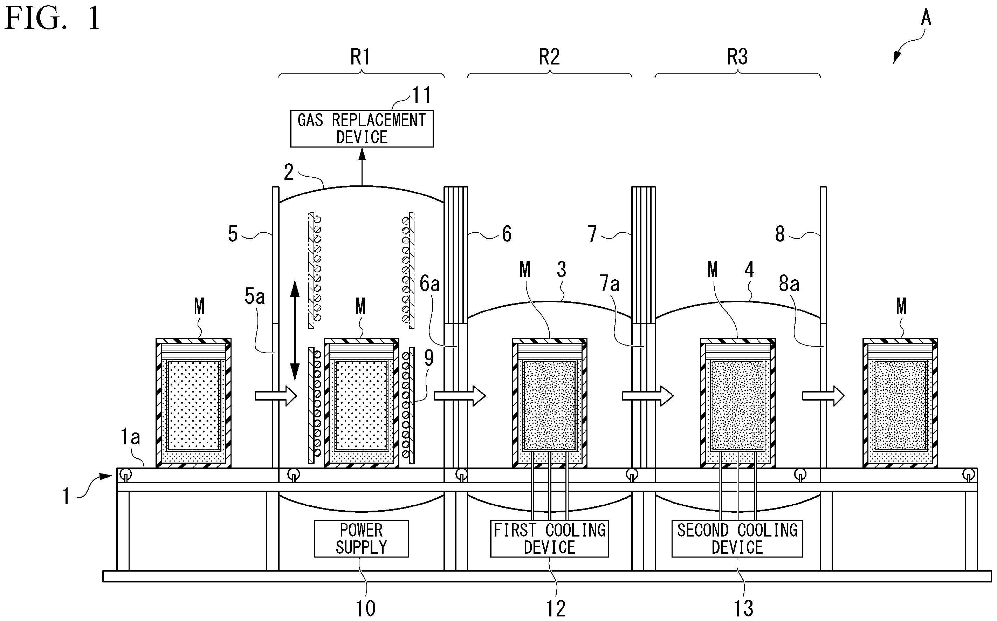

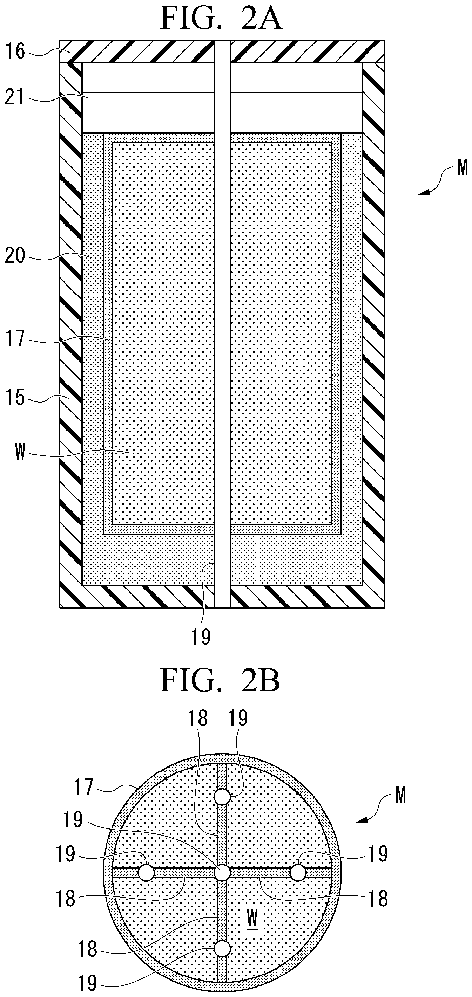

First, a first embodiment of the present disclosure will be described with reference to FIGS. 1, 2A, and 2B. A continuous graphitization device A according to the first embodiment is a graphite producing device that produces graphite by heating a treatment target powder W consisting of carbon to a high temperature of about 2,500°C to 3,000°C.

The treatment target powder W is an amorphous powder including impurities, and when the treatment target powder W is heated to a high temperature of about 2,500°C to 3,000°C, the impurities are removed and the treatment target powder W turns into graphite with a hexagonal crystal structure. The treatment target powder W is a treatment target in the first embodiment.

The continuous graphitization device A performs a heating treatment and a cooling treatment while transporting an object M to be transported that is filled with the treatment target powder W. As shown in FIG. 1, the continuous graphitization device A includes a transport device 1, a heating chamber 2, a first cooling chamber 3, a second cooling chamber 4, a first partition wall 5, a second partition wall 6, a third partition wall 7, a fourth partition wall 8, a heating coil 9, a power supply 10, a gas replacement device 11, a first cooling device 12, and a second cooling device 13 as constituent elements.

Here, the heating chamber 2, the first partition wall 5, the second partition wall 6, the heating coil 9, the power supply 10, and the gas replacement device 11 constitute a heating room R1 as shown in the drawing. In addition, the first cooling chamber 3, the second partition wall 6, the third partition wall 7, and the first cooling device 12 constitute a first cooling room R2. Further, the second cooling chamber 4, the third partition wall 7, the fourth partition wall 8, and the second cooling device 13 constitute a second cooling room R3.

The transport device 1 includes a pair of rails 1a that linearly extend in a horizontal direction and face each other in parallel with a predetermined gap therebetween. The transport device 1 is a facility that transports the object M to be transported placed on the pair of rails 1a in an extension direction of the rails 1a. The transport device 1 may have other structures as long as the object M to be transported can be transported in the horizontal direction. For example, the transport device 1 may have a structure in which the pair of rails 1a are not provided.

The heating chamber 2 is a storage container that is substantially sealed and provided in the middle of the pair of rails 1a. The heating chamber 2 includes a pair of openings (an inlet and an outlet) that face each other in the extension direction of the rails 1a and through which the pair of rails 1a pass. The heating chamber 2 accommodates the object M to be transported that has been carried from the inlet of the heating chamber 2 along the pair of rails 1a, in a substantially sealed state. The object M to be transported accommodated in the heating chamber 2 is carried from the outlet to the first cooling chamber 3 by the transport device 1.

The first cooling chamber 3 is a storage container that is substantially sealed and provided adjacent to the heating chamber 2 in the middle of the pair of rails 1a. The first cooling chamber 3 includes a pair of openings (an inlet and an outlet) that face each other in the extension direction of the rails 1a and through which the pair of rails 1a pass. The first cooling chamber 3 accommodates the object M to be transported that has been carried from the inlet of the first cooling chamber 3 along the pair of rails 1a, in a substantially sealed state. The object M to be transported accommodated in the first cooling chamber 3 is carried from the outlet to the second cooling chamber 4 by the transport device 1.

The second cooling chamber 4 is a storage container that is substantially sealed and provided adjacent to the first cooling chamber 3 in the middle of the pair of rails 1a. The second cooling chamber 4 includes a pair of openings (an inlet and an outlet) that face each other in the extension direction of the rails 1a and through which the pair of rails 1a pass. The second cooling chamber 4 accommodates the object M to be transported that has been carried from the inlet along the pair of rails 1a, in a substantially sealed state. The object M to be transported accommodated in the second cooling chamber 4 is carried from the outlet to the outside by the transport device 1.

That is, the object M to be transported in the first embodiment is linearly transported in the order of the heating chamber 2, the first cooling chamber 3, and the second cooling chamber 4 by the transport device 1 including the pair of rails 1a.

The pair of rails 1a may have a circular shape. That is, the pair of rails 1a may be formed of a first rail and a second rail having a circular shape and having different diameters. The first rail and the second rail are disposed in a concentric manner. The object M to be transported is transported in the order of the heating chamber 2, the first cooling chamber 3, and the second cooling chamber 4 along the pair of circular rails 1a, and then returned to the heating chamber 2.

The first partition wall 5 is provided on the inlet side of the heating chamber 2. The first partition wall 5 includes an inlet door 5a adapted to open and close the inlet of the heating chamber 2. The inlet door 5a is opened in a case where the object M to be transported is accommodated in the heating chamber 2, and the inlet door 5a is closed in a case where the accommodation of the object M to be transported is completed.

The second partition wall 6 is provided between the heating chamber 2 and the first cooling chamber 3. The second partition wall 6 includes a first intermediate door 6a adapted to open and close the outlet of the heating chamber 2, that is, the inlet of the first cooling chamber 3. The first intermediate door 6a is opened in a case where the object M to be transported is moved from the heating chamber 2 to the first cooling chamber 3, and the first intermediate door 6a is closed in a case where the movement of the object M to be transported to the first cooling chamber 3 is completed.

The third partition wall 7 is provided between the first cooling chamber 3 and the second cooling chamber 4. The third partition wall 7 includes a second intermediate door 7a adapted to open and close the outlet of the first cooling chamber 3, that is, the inlet of the second cooling chamber 4. The second intermediate door 7a is opened in a case where the object M to be transported is moved from the first cooling chamber 3 to the second cooling chamber 4, and the second intermediate door 7a is closed in a case where the movement of the object M to be transported to the second cooling chamber 4 is completed.

The fourth partition wall 8 is provided on the outlet side of the second cooling chamber 4. The fourth partition wall 8 includes an outlet door 8a adapted to open and close the outlet of the second cooling chamber 4. The outlet door 8a is opened in a case where the object M to be transported is discharged from the second cooling chamber 4 to the outside, and the outlet door 8a is closed in a case where the carrying of the object M to be transported to the outside is completed.

The heating coil 9 is an induction coil having a hollow cylindrical shape and provided to be movable up and down in the heating chamber 2. The heating coil 9 is suspended from a ceiling of the heating chamber 2 in a posture in which an axial center of the heating coil 9 is in a vertical direction. The heating coil 9 is moved up or down by activating a lifting device provided incidentally.

An inner diameter of the heating coil 9 is set to be larger than an outer diameter of the object M to be transported such that the heating coil 9 can accommodate the object M to be transported therein. The heating coil 9 is set to be positioned at a standby position (rising position) by activating the lifting device in a case where the object M to be transported is accommodated in the heating chamber 2, and is set to be positioned at an operation position (falling position) surrounding the object M to be transported by activating the lifting device in a case where the object M to be transported is heated.

That is, the heating coil 9 is movable to advance and retract with respect to the object M to be transported and makes a magnetic field act on the object M to be transported. The heating coil 9 is set to be at the standby position above the inlet door 5a, so that the object M to be transported can be accommodated in the heating chamber 2. In addition, the heating coil 9 is set to be at the operation position surrounding the object M to be transported, and makes a high-frequency magnetic field act on the object M to be transported based on the energization from the power supply 10.

The heating coil 9 generates a high-frequency magnetic field in the surroundings by the energization from the power supply 10 and inevitably generates heat. The heating coil 9 is provided with a water cooling mechanism to suppress temperature rise of the heating coil 9 due to the heat generation.

The power supply 10 generates high-frequency power for heating. The power supply 10 generates a magnetic field for heating around the heating coil 9 by supplying high-frequency power to the heating coil 9. The magnetic field for heating acts on the inside of the object M to be transported, and thus a susceptor 17 (to be described later) and the treatment target powder W (raw material) are heated. The heating coil 9 and the power supply 10 constitute an induction heating device.

The gas replacement device 11 creates an inert gas atmosphere inside the heating chamber 2. The gas replacement device 11 discharges the air in the heating chamber 2 to the outside from the heating chamber 2 and supplies an inert gas such as nitrogen gas into the heating chamber 2, thereby creating an inert gas atmosphere inside the heating chamber 2.

For example, the heating chamber 2 is provided with an oxygen concentration meter that measures an oxygen concentration in the heating chamber 2. The gas replacement device 11 replaces the air in the heating chamber 2 with an inert gas so that the oxygen concentration indicated by the oxygen concentration meter is equal to or lower than a preset concentration threshold value.

The first cooling device 12 cools the object M to be transported in the first cooling chamber 3. The first cooling device 12 supplies a cooling gas to the object M to be transported and recovers the cooling gas from the object M to be transported via a pair of connection pipes provided incidentally in the first cooling chamber 3.

That is, the first cooling device 12 supplies a cooling gas to the object M to be transported via one connection pipe provided in a lower part in the first cooling chamber 3. In addition, the first cooling device 12 recovers the cooling gas from the object M to be transported via the other connection pipe provided in an upper part in the first cooling chamber 3. The first cooling device 12 allows the cooling gas to flow in the object M to be transported from the lower side to the upper side by supplying and recovering the cooling gas.

The second cooling device 13 cools the object M to be transported in the second cooling chamber 4. The second cooling device 13 supplies a cooling gas to the object M to be transported and recovers the cooling gas from the object M to be transported via a pair of connection pipes provided incidentally in the second cooling chamber 4.

That is, the second cooling device 13 supplies a cooling gas to the object M to be transported via one connection pipe provided in a lower part in the second cooling chamber 4. In addition, the second cooling device 13 recovers the cooling gas from the object M to be transported via the other connection pipe provided in an upper part in the second cooling chamber 4. The second cooling device 13 allows the cooling gas to flow in the object M to be transported from the lower side to the upper side by supplying and recovering the cooling gas.

Next, a detailed configuration of the object M to be transported in the first embodiment will be described with reference to FIGS. 2A and 2B. The object M to be transported is a member that accommodates the treatment target powder W, and includes a furnace shell 15, a furnace lid 16, a susceptor 17, a heat transfer plate 18, cooling pipes 19, a heat insulating layer 20, and a molded heat insulating material 21 as shown in the drawings.

Among the constituent elements of the object M to be transported, the furnace shell 15, the furnace lid 16, the susceptor 17, the heat transfer plate 18, the cooling pipes 19, the heat insulating layer 20, and the molded heat insulating material 21, excluding the treatment target powder W, are members to be heated that are heated together with the treatment target powder W (treatment target) by the heating coil 9.

The furnace shell 15 is a bottomed cylindrical container. A cylindrical internal space of the furnace shell 15 is a space for accommodating the susceptor 17, the heat transfer plate 18, the cooling pipes 19, the heat insulating layer 20, the molded heat insulating material 21, and the treatment target powder W. The furnace shell 15 is made of a non-magnetic and non-conductive material such as silicon carbide (SiC) so as not to be affected by the high-frequency magnetic field generated by the heating coil 9. As shown in the drawing, the furnace shell 15 is placed on the pair of rails 1a of the transport device 1 in a posture in which a bottom portion is on the lower side and an opening portion is on the upper side.

The furnace lid 16 is a circular plate-like member having a diameter substantially equal to the diameter of the furnace shell 15. The furnace lid 16 is made of a non-magnetic and non-conductive material such as silicon carbide (SiC), similarly to the furnace shell 15. The furnace lid 16 is fixed to the upper opening of the furnace shell 15 and closes the upper opening. That is, the furnace lid 16 seals the inside of the furnace shell 15 from above the molded heat insulating material 21 disposed on the upper side of the susceptor 17.

The susceptor 17 is a bottomed cylindrical container that is smaller than the furnace shell 15. The inside of the susceptor 17 accommodates the treatment target powder W (raw material). That is, the susceptor 17 includes a circular peripheral portion, a bottom portion that blocks a lower end of the peripheral portion, and a top portion that blocks an upper end of the peripheral portion. The cylindrical internal space of the susceptor 17 accommodates the treatment target powder W. The top portion is detachably attached to the peripheral portion. The treatment target powder W is accommodated in the susceptor 17 in a state in which the top portion is removed from the peripheral portion.

The susceptor 17 is a heating element made of a conductive and heat-resistant material, in which a high-frequency current (eddy current) is induced by the action of the high-frequency magnetic field generated by the heating coil 9. The susceptor 17 generates heat by the flowing high-frequency current, and as a result, the treatment target powder W (raw material) is heated.

As shown in FIG. 2B, the heat transfer plate 18 is a plate-like member provided in a cross shape in the susceptor 17. The heat transfer plate 18 is made of a material having excellent heat transfer properties and excellent heat resistance. The heat transfer plate 18 has four outer peripheral ends that are in contact with an inner peripheral surface of the susceptor 17, and effectively transfers the heat of the susceptor 17.

Although not shown in FIG. 2B, the heat transfer plate 18 is provided in substantially the entire region of the susceptor 17 in an axial direction (height direction) of the susceptor 17. That is, the heat transfer plate 18 has a vertical length set such that a lower end thereof abuts on the inner bottom surface (that is, the upper surface of the bottom portion) of the susceptor 17 and an upper end thereof is in contact with the inner top surface (that is, the lower surface of the top portion) of the susceptor 17. The heat transfer plate 18 transfers the heat generated from the susceptor 17, that is, the heat generated on the outer peripheral side of the treatment target powder W (raw material), to the inside of the treatment target powder W.

The cooling pipes 19 are a plurality of pipes that extend in the axial direction (height direction) of the object M to be transported and are provided in a state of being spaced apart from each other in the radial direction of the object M to be transported. That is, the cooling pipes 19 are provided to penetrate the furnace shell 15, the furnace lid 16, the susceptor 17, the heat insulating layer 20, the molded heat insulating material 21, and the treatment target powder W in the vertical direction.

More specifically, a total of five cooling pipes 19 are provided as shown in FIG. 2B. Among the total of five cooling pipes 19, one cooling pipe is provided at an axial center of the susceptor 17, that is, an axial center of the object M to be transported. Among the total of five cooling pipes 19, the remaining four cooling pipes are provided at intermediate parts of the cross-like heat transfer plate 18 in the radial direction.

The cooling pipes 19 are set at reference positions in the first cooling chamber 3, and thus lower ends (one ends) thereof are connected to the first cooling device 12. In addition, the cooling pipes 19 are set at reference positions in the second cooling chamber 4, and thus the lower ends (one ends) thereof are connected to the second cooling device 13. Upper ends (the other ends) of the cooling pipes 19 are open ends. In addition, the cooling pipes 19 are configured so that the cooling gas can circulate.

In a cooling step after heating of the treatment target powder W, the cooling gas supplied from the first cooling device 12 or the second cooling device 13 sequentially flows in the cooling pipe 19 from the lower side to the upper side. The treatment target powder W, which is heated to a high temperature of about 2,500°C to 3,000°C in a heating step that is a pre-step prior to the cooling step, is cooled by heat exchange with the cooling gas via the cooling pipe 19.

The heat insulating layer 20 is a powdery heat insulating material accommodated in the furnace shell 15. As shown in the drawing, the cylindrical susceptor 17 is accommodated in the cylindrical furnace shell 15 in a concentric manner and the heat insulating layer 20 is provided around the susceptor 17 to fill a space between the furnace shell 15 and the susceptor 17. That is, the heat insulating layer 20 is provided between the inner peripheral surface of the furnace shell 15 and the outer peripheral surface of the susceptor 17 and between the inner bottom surface of the furnace shell 15 and the outer bottom surface of the susceptor 17.

The molded heat insulating material 21 is a layered heat insulating material disposed on the top portion of the susceptor 17. The molded heat insulating material 21 is formed by stacking a plurality of plate-like heat insulating materials. The molded heat insulating material 21 is set to have a cylindrical shape having a diameter that matches the inner periphery of the furnace shell 15, so that the molded heat insulating material 21 can be disposed on the top portion of the susceptor 17, that is, accommodated in the furnace shell 15.

The object M to be transported includes, in addition to the treatment target powder W and the susceptor 17 that heats the treatment target powder W, the furnace shell 15, the furnace lid 16, the heat transfer plate 18, the cooling pipes 19, the heat insulating layer 20, and the molded heat insulating material 21. That is, the object M to be transported contains the treatment target powder W, and includes at least the susceptor 17 that heats the treatment target powder W.

Next, an operation of the continuous graphitization device A configured as described above will be described in detail.

In the continuous graphitization device A according to the first embodiment, first, a preparation step for the object M to be transported is performed. In this preparation step, as shown in FIGS. 2A and 2B, the susceptor 17 is automatically or manually filled with the treatment target powder W and the furnace lid 16 is mounted on the furnace shell 15 in a state in which the molded heat insulating material 21 is placed on the susceptor 17. A crucible made of graphite may be mounted in the susceptor 17 and filled with the treatment target powder W.

The object M to be transported that has been subjected to the preparation step is moved onto the transport device 1 as shown in FIG. 1 and the heating step is performed. That is, the object M to be transported is disposed on the rails 1a of the transport device 1 in front of (outside) the inlet door 5a provided in the first partition wall 5. The object M to be transported is transported to the inside of the heating chamber 2 via the inlet by activating the transport device 1.

Then, the gas replacement device 11 is activated in a state in which the inlet door 5a and the first intermediate door 6a are closed, so that the air in the heating chamber 2 is deaerated and replaced with an inert gas and the environment in the heating chamber 2 is set to be an inert gas atmosphere. That is, the environment in the heating chamber 2 is set to be in a state in which the oxygen concentration is extremely low.

Then, the lifting device provided incidentally in the heating coil 9 is activated, so that the heating coil 9 is moved down from the standby position (rising position) and set to be positioned at the operation position (falling position) surrounding the object M to be transported. Then, the power supply 10 is activated to supply a high-frequency current to the heating coil 9 at the operation position.

The heating coil 9 generates a high-frequency magnetic field (induced magnetic field) in the surroundings by being supplied with the high-frequency current from the power supply 10. This high-frequency magnetic field selectively acts on the susceptor 17 made of a conductive material in the object M to be transported, thereby generating an induced current (eddy current).

The susceptor 17 generates heat by the induced current (eddy current) and heats the treatment target powder W (raw material). By continuing the heat generation of the susceptor 17 by the induced current for a predetermined time, the treatment target powder W is finally heated to a high temperature of about 2,500°C to 3,000°C.

In the heating of the treatment target powder W (raw material) with the susceptor 17, the cross-like heat transfer plate 18 is provided inside the susceptor 17 that is a heating element. With the heat transfer plate 18, the heat generated from the susceptor 17 is transferred not only to the outer periphery of the treatment target powder W but also to the inside of the treatment target powder W. As a result, an inner portion and an outer portion of the treatment target powder W (raw material) are uniformly heated and reach a high temperature of about 2,500°C to 3,000°C, and the treatment target powder W turns into a treated powder Wa (graphite).

In a case where the heating step in the heating room R1 is completed as described above, the activation of the power supply 10 is stopped. Then, the lifting device is activated to move the heating coil 9 from the operation position (falling position) surrounding the object M to be transported to the standby position (rising position). In this state, the first intermediate door 6a is opened and the transport device 1 is activated, so that the object M to be transported is transported from the heating room R1 to the first cooling room R2 and a first cooling step is performed.

Then, the environment in the first cooling chamber 3 is set to be in a sealed state by closing the first intermediate door 6a and the second intermediate door 7a. In this state, the first cooling device 12 is activated to supply a cooling gas from the lower ends of the cooling pipes 19 of the object M to be transported and to recover the cooling gas exhausted into the first cooling chamber 3 from the upper ends of the cooling pipes 19.

That is, the cooling gas is sequentially supplied to the cooling pipes 19 of the object M to be transported in a circulating manner. The treated powder Wa (graphite) in the object M to be transported is gradually cooled by heat exchange with the cooling gas that flows from the lower side to the upper side in the cooling pipes 19. Then, after a predetermined cooling time has elapsed, the activation of the first cooling device 12 is stopped and the first cooling step is completed.

In a case where the first cooling step is completed as described above, the second intermediate door 7a is opened and the transport device 1 is activated, so that the object M to be transported is transported from the first cooling room R2 to the second cooling room R3 and a second cooling step is performed. In the second cooling step, the environment in the second cooling chamber 4 is set to be in a sealed state by closing the second intermediate door 7a and the outlet door 8a.

In this state, the second cooling device 13 is activated to supply a cooling gas from the lower ends of the cooling pipes 19 of the object M to be transported and to recover the cooling gas exhausted into the second cooling chamber 4 from the upper ends of the cooling pipes 19. The cooling gas is sequentially supplied to the cooling pipes 19 of the object M to be transported in a circulating manner, and thus the treated powder Wa (graphite) in the object M to be transported is sequentially cooled over time by heat exchange with the cooling gas that flows from the lower side to the upper side in the cooling pipes 19.

Then, after a predetermined cooling time has elapsed, the activation of the second cooling device 13 is stopped and the second cooling step is completed. The treated powder Wa (graphite) in the object M to be transported is cooled to a desired temperature through the first cooling step and the second cooling step. In a case where the second cooling step is completed as described above, the outlet door 8a is opened and the transport device 1 is activated, so that the object M to be transported is automatically or manually discharged to the outside of the continuous graphitization device A.

According to the present embodiment, since the member to be heated (the furnace shell 15, the furnace lid 16, the susceptor 17, the heat transfer plate 18, the cooling pipes 19, the heat insulating layer 20, and the molded heat insulating material 21) that is heated together with the treatment target powder W (raw material) is transported together with the treatment target powder W (raw material), it is possible to provide a heat treatment device A and a heat treatment method that can improve maintainability of a member to be heated, compared to the related art.

That is, the furnace shell 15, the furnace lid 16, the susceptor 17, the heat transfer plate 18, the cooling pipes 19, the heat insulating layer 20, and the molded heat insulating material 21 are consumables that deteriorate due to induction heating by the magnetic field generated by the heating coil 9. In a case where such consumables are fixed and installed in the heating chamber 2, it is necessary to stop the operation when performing maintenance of the consumables. However, according to the present embodiment, since such consumables are transported together with the treatment target powder W, maintenance such as replacement or repair is easily performed and it is possible to continue the operation of the device, without interrupting the operation, even during the maintenance of the object M to be transported.

According to the present embodiment, since the heat transfer plate 18 is provided, the treatment target powder W (raw material) can be uniformly heated. That is, according to the present embodiment, it is possible to suppress the uneven heating of the treatment target powder W (raw material) and it is possible to suppress inputting unnecessary energy in the heating.

According to the present embodiment, since the cooling pipe 19 is provided, the treated powder Wa (graphite) can be uniformly and effectively cooled. That is, according to the present embodiment, the time required for cooling of the treated powder Wa (graphite) can be reduced and the input energy can be suppressed.

According to the present embodiment, since the gas replacement device 11 is provided, it is possible to suppress the consumption due to the oxidation of the structure (the structure in the furnace) in the heating chamber 2 and the generation of carbon dioxide (CO₂). That is, according to the present embodiment, it is possible to provide a heat treatment device A and a heat treatment method with a small environmental load.

According to the present embodiment, since the molded heat insulating material 21 is adopted as a heat insulating material to be laid on the susceptor 17, instead of the heat insulating layer 20, the work environment in a case where the treated powder Wa (graphite) is taken out can be made clean. In a case where the heat insulating layer 20 is adopted instead of the molded heat insulating material 21, it becomes necessary to extract the treated powder Wa (graphite) from the heat insulating layer 20, and thus the heat insulating layer 20 may turn into dust and deteriorate the work environment. In the present embodiment, since it is necessary to extract the treated powder Wa (graphite), the work environment can be made clean.

### [Second Embodiment]

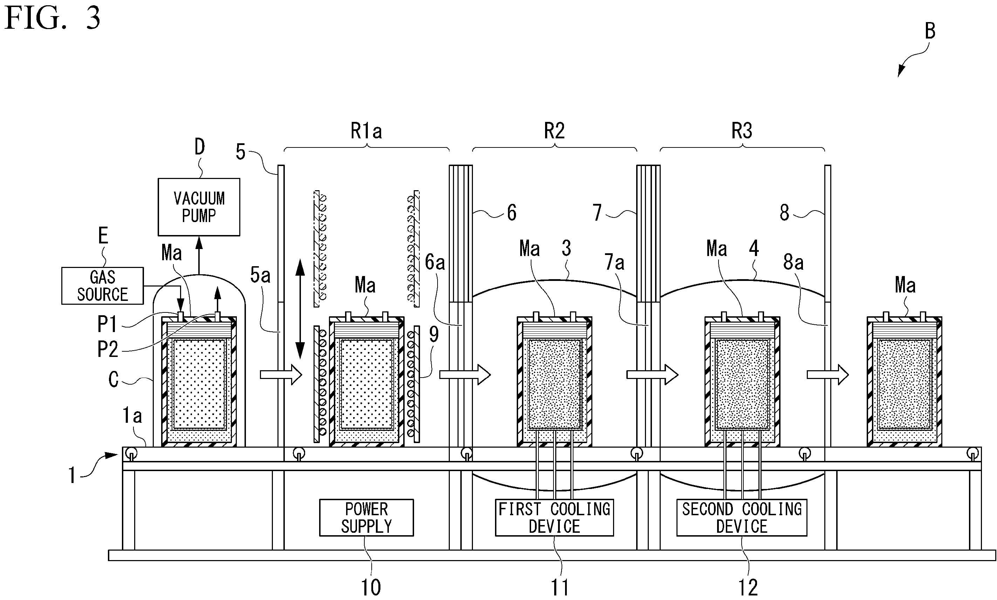

Hereinafter, a second embodiment of the present disclosure will be described with reference to FIG. 3. In the second embodiment, in a pre-step prior to the heating treatment for the treatment target powder W (raw material), the treatment target powder W (raw material) is held in a deaerated atmosphere or an inert gas atmosphere.

That is, a heat treatment device B according to the second embodiment includes a heating room R1a in which the heating chamber 2 and the gas replacement device 11 are removed from the heating room R1 of the first embodiment. The first cooling room R2 and the second cooling room R3 of the heat treatment device B are the same as the first cooling room R2 and the second cooling room R3 of the first embodiment.

An object Ma to be transported in the second embodiment has a gas supply port P1 and an exhaust port P2 that communicate with the inside and the outside and are provided in the furnace lid 16. Each of the gas supply port P1 and the exhaust port P2 is provided with, for example, a check valve. The object Ma to be transported is accommodated in a preparation chamber C at a stage prior to the heating step in the heating room R1a, that is, in a pre-step in which the object Ma to be transported is carried to the heating room R1a.

A vacuum pump D is connected to the preparation chamber C and a gas source E is connected to the gas supply port P1 of the object Ma to be transported. Then, the vacuum pump D is activated to exhaust the residual air in the object Ma to be transported and the air in the preparation chamber C to the outside of the preparation chamber C, and the gas source E is activated to supply an inert gas into the object Ma to be transported and to set the inside of the preparation chamber C to be in an inert gas atmosphere.

The object Ma to be transported is taken out of the preparation chamber C, and accommodated in the heating room R1a provided with the heating coil 9 and the power supply 10 by activating the transport device 1. Here, since the valves are provided in the gas supply port P1 and the exhaust port P2 in the object Ma to be transported, the inert gas atmosphere inside the object Ma to be transported is held even in a case where the object Ma to be transported is taken out of the preparation chamber C.

The object Ma to be transported is transported from the heating room R1a to the first cooling room R2 by activating the transport device 1 and subjected to primary cooling. Then, in a case where the primary cooling in the first cooling room R2 is completed, the object Ma to be transported is transported from the first cooling room R2 to the second cooling room R3 and subjected to secondary cooling. Then, in a case where the secondary cooling in the second cooling room R3 is completed, the object Ma to be transported is carried from the outlet door 8a to the outside.

According to the second embodiment, in addition to the various effects of the first embodiment described above, there is no need for a relatively large-capacity chamber considering the local heating during induction heating, such as the heating chamber 2 of the first embodiment. Therefore, according to the second embodiment, it is possible to provide a heat treatment device B having a simpler device configuration than the heat treatment device A according to the first embodiment.

The present disclosure is not limited to the above-described embodiments, and for example, the following modifications are considered.
(1) In the above-described embodiments, the case where the present disclosure is applied to the graphite producing device has been described, but the present disclosure is not limited thereto. The treatment target in the present disclosure is not limited to the powder that is a raw material for graphite, and includes various powders or objects other than the powder. For example, the treatment target may be a sheet-like object or a granular object other than the powder.
(2) In the above-described embodiments, the objects M and Ma to be transported are configured to include the furnace shell 15, the furnace lid 16, the susceptor 17 (heating element), the heat transfer plate 18, the cooling pipes 19, the heat insulating layer 20, and the molded heat insulating material 21. However, the configuration of the object M to be transported is not limited thereto.

The objects M and Ma to be transported contains the treatment target powder W, and include at least the susceptor 17 (heating element). Thus, in the objects M and Ma to be transported, constituent elements other than the susceptor 17 (heating element) and the treatment target powder W are provided as necessary. For example, the objects M and Ma to be transported may be formed only of the susceptor 17 (heating element), and the heat insulating layer 20 and molded heat insulating material 21 provided incidentally in the susceptor 17.

(3) In the above-described embodiments, the continuous graphitization devices A and B that induction-heat the treatment target powder W have been described, but the present disclosure is not limited thereto. The present disclosure can also be applied to an electric heating type continuous graphitization device or a resistance heating type continuous graphitization device.

That is, in the electric heating type continuous graphitization device, instead of the susceptor 17 as a heating element, a conductive container accommodates the treatment target powder W, and the treatment target powder W is applied with a current for heating by a counter electrode embedded in the treatment target powder W and the conductive container. In this case, the conductive container, the counter electrode, the heat insulating material disposed around the conductive container, and the like are members to be heated that are heated together with the treatment target powder W.

In the electric heating type continuous graphitization device, members to be heated such as the conductive container, the counter electrode, and the heat insulating material are transported together with the treatment target powder W. Therefore, it is possible to improve maintainability of the members to be heated compared to the related art.

(4) In the above-described embodiments, details of the installation layout of the rails 1a in the transport device 1 have not been described, but various installation layouts of the rails 1a, that is, various transport paths of the objects M and Ma to be transported are considered in consideration of the treatment efficiency of the treatment target powder.

(5) In the above-described embodiments, the continuous graphitization devices A and B are configured by three chambers including the heating room R1, the first cooling room R2, and the second cooling room R3, or three chambers including the heating room R1a, the first cooling room R2, and the second cooling room R3, but the present disclosure is not limited thereto. That is, the number of the chambers of the continuous graphitization devices A and B, that is, the number of the stop positions (number of positions) in the transport of the objects M and Ma to be transported may not be three.

(6) In the above-described embodiments, the impurities contained in the treatment target powder W and the like may volatilize in the heating step. A gas exhaust pipe that exhausts the volatile gas to the outside of the objects M and Ma to be transported and to the outside of the heating chamber 2 may be provided.

(7) In the second embodiment, the treated powder Wa (graphite) is cooled using the first cooling chamber 3 and the second cooling chamber 4, but the present disclosure is not limited thereto. Since the object Ma to be transported of the second embodiment is provided with the gas supply port P1 and the exhaust port P2, the treated powder Wa (graphite) in the object Ma to be transported may be cooled by directly connecting the first cooling device 12 or the second cooling device 13 to the gas supply port P1 and the exhaust port P2.

That is, in this modification, a cooling gas is supplied to the gas supply port P1 from the first cooling device 12 or the second cooling device 13, and the first cooling device 12 or the second cooling device 13 recovers the cooling gas heated by heat exchange from the exhaust port P2. Accordingly, the treated powder Wa (graphite) is cooled by circulation with the cooling gas. According to such a cooling method, since the first cooling chamber 3 and the second cooling chamber 4 are not required, the device configuration of the heat treatment device can be further simplified.

### INDUSTRIAL APPLICABILITY

According to the present disclosure, it is possible to provide a heat treatment device and a heat treatment method that can improve maintainability of a member to be heated compared to the related art.

### REFERENCE SIGNS LIST

A, B: Continuous graphitization device (heat treatment device)
M, Ma: Object to be transported
W: Treatment target powder (treatment target)
1: Transport device
2: Heating chamber
3: First cooling chamber
4: Second cooling chamber
5: First partition wall
6: Second partition wall
7: Third partition wall
8: Fourth partition wall
9: Heating coil
10: Power supply
11: Gas replacement device
12: First cooling device
13: Second cooling device
15: Furnace shell
16: Furnace lid
17: Susceptor (heating element)
18: Heat transfer plate
19: Cooling pipe
20: Heat insulating layer
21: Molded heat insulating material

## Claims

1. A heat treatment device comprising:
an object to be transported that contains a treatment target and includes at least a heating element that heats the treatment target;
a transport device that transports the object to be transported; and
an induction heating device that includes a heating coil that is movable to advance and retract with respect to the object to be transported, and makes a magnetic field act on the object to be transported to generate heat from the heating element.

2. The heat treatment device according to Claim 1,
wherein the object to be transported further includes a heat insulating material provided around the heating element.

3. The heat treatment device according to Claim 1 or 2,
wherein the object to be transported further includes a cooling pipe through which a cooling gas flows.

4. The heat treatment device according to any one of Claims 1 to 3,
wherein the object to be transported includes a heat transfer plate that transfers the heat generated from the heating element to an inside of the treatment target.

5. The heat treatment device according to any one of Claims 1 to 4,
wherein the object to be transported is configured to previously hold the heating element and the treatment target in a deaerated atmosphere or an inert gas atmosphere.

6. A heat treatment method of heat-treating a treatment target, the method comprising:
transporting, together with the treatment target, a member to be heated that is heated together with the treatment target.

7. The heat treatment method according to Claim 6,
wherein, in a pre-step prior to a heat treatment, the treatment target is held in a deaerated atmosphere or an inert gas atmosphere.
